# FASCICULE DE BREVET EUROPEEN

(11) **EP 3 242 797 B1**
(45) Date de publication et mention de la délivrance du brevet: **04.11.2020**
(21) Numéro de dépôt: 16705290.1
(22) Date de dépôt: 05.01.2016
(51) Int. Cl.: B32B 5/02, B32B 7/06, B32B 27/12, B32B 27/32, B32B 27/36

(54) **PROCEDE DE FABRICATION D'UN ARTICLE EN FEUILLE, NOTAMMENT DECORATIF**
VERFAHREN ZUR HERSTELLUNG EINES GEGENSTANDES IN FORM EINER FOLIE, INSBESONDERE EINES ZIERGEGENSTANDES
METHOD FOR MANUFACTURING AN ITEM IN THE FORM OF A SHEET, PARTICULARLY A DECORATIVE ITEM

(30) Priorité: 05.01.2015 FR 1550021
(43) Date de publication de la demande: 15.11.2017
(73) Titulaire: Corso Magenta, 92000 Nanterre (FR)
(72) Inventeur: CHEVALLIER, Stanislas, 78170 La Celle Saint Cloud (FR)
(74) Mandataire: Le Forestier, Eric
(86) Numéro de dépôt international: PCT/IB2016/050032
(87) Numéro de publication internationale: WO 2016/110799

(56) Documents cités:
- WO-A1-99/56682
- WO-A2-01/49908
- WO-A2-2006/084865

## Description

### Domaine de l'invention

La présente invention concerne d'une façon générale les films de finition, en particulier les films décoratifs, réalisés à base de peintures ou vernis.

### Etat de la technique

On a déjà décrit dans les littératures différentes techniques pour fabriquer un film de peinture sèche à appliquer sur un support définitif.

On se référera notamment aux documents WO2006084865A2, WO2010139778A2 et WO2012072794A1 ayant des inventeurs communs avec ceux de la présente demande.

Dans toutes ces techniques connues, on applique une ou plusieurs couches de peinture, vernis, etc. sur un support dit moulant, qui va donner au film son aspect de surface définitif, et on utilise différentes approches pour transférer ce film sur son support définitif. Ce transfert fait appel d'une façon générale à l'application d'adhésif et à un ou plusieurs supports temporaires minces. Dans certains cas, un tel film de support peut être un adhésif dans un état inactif.

Ces procédés connus, bien qu'ils soient efficaces, nécessitent un certain nombre d'opérations plus ou moins complexes pour réaliser la ou les couches de peinture et les combiner avec d'autres films pour aboutir au produit commercial définitif à appliquer sur le support final. Par ailleurs, dans certaines réalisations, la pose du film sur son support définitif nécessite des compétences ou une délicatesse particulières.

Concernant particulièrement le document WO2006084865A2, on notera que l'assemblage d'un film de peinture et d'un support de type textile ou analogue s'effectue toujours par l'entremise d'un adhésif désactivable, le film de peinture étant destiné à être séparé de son support à un certain stade.

Enfin pour mémoire, le document WO0149908A2 décrit la stratification d'un film de polyoléfine avec un non tissé, avec le recours à un adhésif spécifique entre les deux.

### Résumé de l'invention

L'invention vise à simplifier la fabrication d'un article destiné à donner à un support définitif un aspect maîtrisé, et notamment à proposer un procédé de fabrication d'un tel article qui soit simple et économique, sans recours à un adhésif. Un autre objet de l'invention est de permettre de réaliser un article en feuille qui soit résistant et simple à poser, tout en pouvant s'adapter dans une certaine mesure à des supports finaux non plans ou non réguliers.

Enfin un autre aspect de l'invention est de réaliser un article dont le rendu final ne soit pas tributaire des caractéristiques, notamment de relief, de porosité, etc. du support final.

On propose à cet effet un procédé de préparation d'un article en feuille destiné à être fixé sur un support définitif, le procédé comprenant les étapes suivantes :
- appliquer au moins une couche de matière à peindre sur un support temporaire, le support temporaire étant choisi pour qu'après séchage, une séparation entre le support temporaire et la couche de matière à peindre, ou la première couche de matière à peindre, puisse être assurée par pelage, et
- avant séchage complet de la couche de matière à peindre, ou de la dernière couche de matière à peindre, appliquer directement sur la surface libre de celle-ci une couche de dossier en matériau fibreux non adhésivé dans des conditions mécaniques propres à créer une interpénétration partielle des fibres du matériau de la couche de dossier et de la matière à peindre non séchée et, après séchage, un ancrage permanent de la ou des couches de matière à peindre sur ladite couche de dossier.

Certains aspects préférés mais non limitatifs de ce procédé comprennent les caractéristiques suivantes, prises individuellement ou en toutes combinaisons que l'homme du métier appréhendera comme étant techniquement compatibles :
* le support temporaire est un support moulant, dont l'état de surface est transféré en négatif à la couche de matière à peindre ou à la première couche de matière à peindre.
* la couche de dossier en matériau fibreux est une feuille d'un non-tissé.
* le non-tissé comprend des fibres d'au moins un matériau choisi dans le groupe comprenant verre, polyesters, cellulose, polypropylène.
* le non-tissé comprend en outre un liant.
* l'épaisseur de la couche de dossier est comprise entre environ 50 et 400 µm.
* le grammage de la couche de dossier est compris entre environ 10 et 150 g/m².
* la couche de matière à peindre ou la dernière couche de matière à peindre présente une épaisseur comprise entre environ 15 et 150 µm après séchage.
* l'étape d'application de la couche de dossier est mise en œuvre avec une pression d'application obtenue par réduction de l'épaisseur de l'ensemble comprenant le support temporaire, la ou les couches de matière à peindre et le dossier jusqu'à une valeur comprise entre environ 65 et 95% de la somme de leurs épaisseurs à l'état libre.
* le procédé comprend l'application de plusieurs couches de matière à peindre dont une couche de finition directement en contact avec le support temporaire et une couche primaire destinée à recevoir la feuille mince de dossier.
* le procédé comprend une étape supplémentaire de séparation du support temporaire d'avec la couche de matière peindre ou d'avec la première couche de matière à peindre, une fois séchée.
* le procédé comprend en outre une étape d'application d'un film de protection pelable sur la surface libre de la ou des couches de matière à peindre dégagée(s) du support temporaire.
* le support temporaire est destiné à demeurer sur l'article en feuille jusqu'à sa pose et tient lieu de couche de protection pelable.

On propose également un procédé de fabrication de plusieurs articles en feuille successivement, où le support temporaire est à chaque fois retiré, caractérisé en ce qu'il comprend plusieurs mises en œuvre du procédé tel que défini ci-dessus avec le même support temporaire.

### Brève description des dessins

D'autres aspects, buts et avantages de la présente invention apparaîtront mieux à la lecture de la description détaillée suivante d'une forme de réalisation préférée de celle-ci, donnée à titre d'exemple non limitatif et faite en référence aux dessins annexés, sur lesquels :
Les Figures 1A à 1G sont des vues en coupe à échelle transversale agrandie illustrant un ensemble d'étapes d'un procédé selon l'invention, et
La Figure 2 est un agrandissement d'une partie de la Figure 1C.

### Description détaillée d'une forme de réalisation préférée

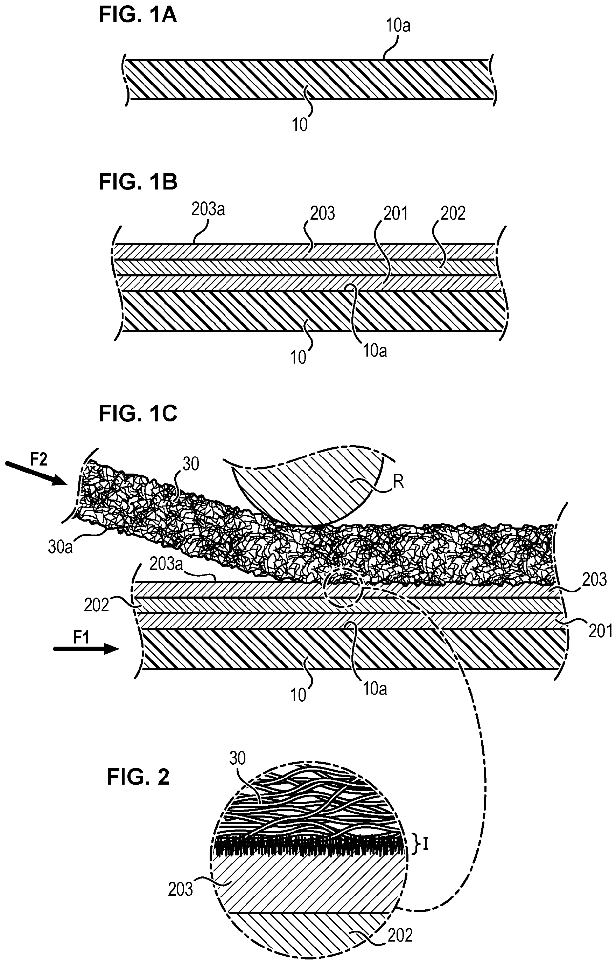

En référence tout d'abord aux figures 1A à 1G, on va décrire en détail un procédé de fabrication d'un article pour application d'un film décoratif à base de peinture ou de vernis sur un support définitif.

Le support définitif peut être de natures diverses. Il peut s'agir d'un mur ou d'un plafond d'un bâtiment, d'un véhicule tel qu'un aéronef, etc.

Dans une première étape (Figure 1A), on prévoit un support moulant 10 présentant sur l'une de ses faces 10a des propriétés de surface qui détermineront la finition du feuil sec de peinture ou vernis porté par son dossier comme on le verra plus loin.

Ce support moulant est réalisé par exemple en l'un des matériaux suivants : polypropylène, polyéthylène, polyéthylène téréphtalate, papier siliconé. Il peut être lisse ou présenter tout motif en creux ou en relief souhaité, tel qu'un effet matière ou des micro-rainures ou micro-nervures, obtenu par exemple par calandrage.

Selon le matériau utilisé pour le support, son épaisseur est comprise typiquement entre environ 30 et 200 µm.

En référence à la Figure 1B, on applique sur la face 10a du support moulant 10 une ou plusieurs couches de matière à peindre. Il peut typiquement s'agir d'une peinture à base d'une résine en phase aqueuse de type acrylique, vinylique ou alkyde, d'une résine en phase solvantée de type glycérophtalique ou polyuréthanne, ou d'une résine bi-composant, par exemple de type époxyde, avec ou sans solvant, contenant conventionnement des produits de charge et des pigments. En variante, il peut s'agir d'une ou plusieurs couches de vernis à base des mêmes résines, ou d'une combinaison d'au moins une couche de peinture et d'au moins une couche de vernis.

Selon la fonction de l'article à réaliser et le rendu souhaité, une ou plusieurs couches de matière à peindre sont appliquées.

Les techniques d'application de la matière à peindre peuvent être variées. On peut l'appliquer à la racle, à la brosse, au pistolet, etc. ces opérations étant de préférence automatisées sur un poste d'application alors que le support moulant 10 est déroulé à partir d'un rouleau et transporté à travers ce poste.

La figure 1B illustre le cas où on a appliqué successivement sur la face 10a du support 10 une couche de finition 201, une couche intermédiaire 202 et une couche 203 jouant le rôle de primaire dans le produit final, avec des épaisseurs par exemple de l'ordre de 15 à 150 µm chacune (ou même davantage avec des peintures ou vernis durcissant par réticulation, sans contraintes d'évaporation de solvant). Un temps de séchage approprié est prévu entre les applications des différentes couches, à l'exception de la dernière couche 203 comme on va le voir dans la suite.

Ces épaisseurs peuvent être identiques ou différentes. Il est à noter que l'épaisseur de la couche appliquée en dernier peut être supérieure, égale ou inférieure à celle de la ou des autres couches.

Selon un aspect de l'invention, et en référence à la figure 1C, on applique un dossier 30 ou couche support directement sur la face libre 203a de la dernière couche de matière à peindre déposée. De façon à réaliser l'ancrage de ce dossier dans la matière à peindre par l'application même du dossier, cette application est réalisée rapidement après l'application de la dernière couche 203 de matière à peindre (ou de l'unique couche de matière à peindre lorsqu'une seule couche est prévue), avant séchage de celle-ci.

Ce dossier 30 est avantageusement constitué par une feuille mince de matériau fibreux, et plus préférentiellement une feuille de matériau non-tissé réalisé à base de fibres d'un ou plusieurs matériaux choisis de préférence dans le groupe comprenant verre, polyester, cellulose, polypropylène, non adhésivé, présentant une porosité telle que, lors de cette application, la matière à peindre non sèche va imbiber partiellement la structure du dossier, en migrant au sein de cette structure à travers ses espaces libres. De cette manière, après séchage de la peinture ou du vernis (selon le type de résine, évaporation de solvant et coalescence, et/ou réticulation), on obtient un ancrage extrêmement solide de la peinture ou du vernis sur son dossier 30.

Dans une forme de réalisation préférée, le dossier est une feuille d'un non-tissé de verre d'une épaisseur de 50 à 500 µm, plus préférentiellement d'environ 150 à 400 µm, et d'un grammage compris entre environ 10 et 150 g/m².

La pression d'application est choisie pour assurer une interpénétration contrôlée de la matière peinte non sèche et des fibres du non-tissé, comme illustré sur la Figure 2 qui est une vue partielle à échelle agrandie d'une zone de la Figure 1C. L'interface «floue» correspondante est désignée par la référence I.

Comme l'illustre également la Figure 1C, l'assemblage du dossier 30 sur le complexe formé du support moulant 10 et des couches de matière peinte 201, 202, 203 est réalisé de préférence dans un poste d'assemblage où les éléments à assembler sont amenés à la même vitesse (flèches F1 et F2) et où un rouleau presseur R réalise l'assemblage avec la pression souhaitée. Le contre-rouleau n'est pas représenté par souci de simplification. La pression d'application souhaitée est obtenue en choisissant une dimension de l'intervalle entre le rouleau et le contre-rouleau qui soit égale à environ 65 à 95% de la somme des épaisseurs des éléments amenés (support temporaire pourvu de la ou des couches de matière à peindre, la dernière étant non séchée + dossier). La valeur de ce pourcentage est choisie notamment en fonction de la nature du dossier et de la nature de la couche de matière à peindre dans laquelle le dossier s'ancre.

Les paramètres essentiels qui déterminent la qualité de l'ancrage sont l'épaisseur de la couche de matière peinte (ou de la dernière couche), sa viscosité au moment de l'application du dossier, l'épaisseur du dossier, la porosité ou la mouillabilité du dossier (sur laquelle le diamètre moyen des fibres de verre a une influence), la pression d'application du dossier sur la face libre de la ou des couches de matière peinte, la vitesse de déplacement selon les flèches F1 et F2 et le diamètre du rouleau R.

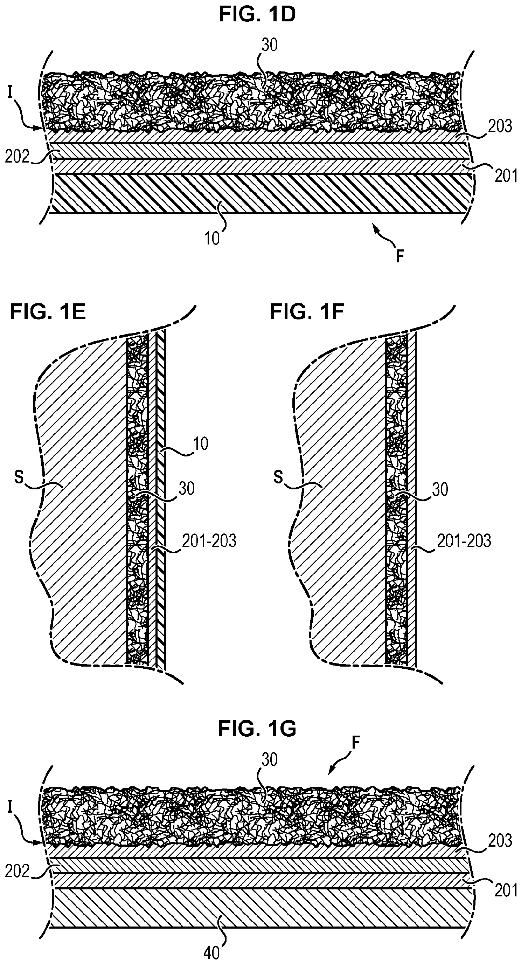

Une fois le dossier 30 appliqué sur la ou les couches de matière peinte et une fois que la dernière couche de matière peinte (ici 203), ou la couche de matière peinte unique a séché, on obtient la structure illustrée sur la Figure 1D.

Dans une première approche, le support moulant 10 peut être laissé en place et jouer le rôle de film amovible de protection de la matière peinte séchée. Dans ce cas, l'article est appliqué sur un support final S après encollage de l'article et/ou du support final, comme illustré sur la figure 1E, puis le support moulant est pelé à la main pour exposer la ou les couches de matière peinte, et éventuellement récupéré pour recycler son matériau.

La structure finale de l'article en feuille est illustrée sur la Figure 1F.

L'adhésif utilisé dépend notamment du type de support. Pour un support du type utilisé dans le bâtiment, on utilise de préférence un adhésif en phase aqueuse par exemple de type EVA (copolymère éthylène/acétate de vinyle) ou PVAc (polyacétate de vinyle), appliqué préférentiellement sur le support final. L'homme du métier saura en toute hypothèse adapter le choix de l'adhésif à la nature du support final S et aux conditions auxquelles l'ensemble support final/article en feuille est destiné à être exposé.

En variante, il est possible de complexer l'article en feuille avec une couche de matière adhésive située sur la face opposée à la ou aux couches de matière peinte, et protégée par un film pelable afin d'éviter de manipuler de la matière en phase humide pour la fixation au support final. Dans ce cas, on retire le film pelable avant l'application puis on applique l'article sur le support final.

On comprend que, dans ce cas où le support moulant demeure dans le produit final, il est choisi en particulier en fonction de critères économiques, sa nature et son épaisseur ayant une influence directe sur le coût de revient de l'article fini.

Dans une seconde approche, le support moulant 10 est retiré de l'ensemble illustré sur la Figure 1D après séchage, pour être réutilisé pour une nouvelle exécution du procédé de fabrication. Dans ce cas, il peut être remplacé par une pellicule de protection pelable auto-adhérente mince 40 de type connu en soi, dont la qualité de surface ou l'épaisseur ne sont pas critiques, et qui peut donc être économique. Cette pellicule pelable est retirée après la pose.

L'article en feuille correspondant est illustré sur la figure 1G.

On obtient par le procédé de l'invention un article pouvant être conditionné en rouleau, qui peut être facilement manipulé grâce à la robustesse du dossier, et qui masque complètement l'état de surface du support final, pourvu qu'il soit raisonnablement être dépourvu d'aspérités (des creux de petites dimensions sont possibles).

Bien entendu, la présente invention n'est nullement limitée aux formes de réalisation décrites et représentées, mais l'homme du métier saura y apporter toute variante ou modification.

En particulier, tout ou partie des couches de matière à peindre peuvent être fonctionnalisées, par exemple conformément aux enseignements du document WO2010/139778A2.

## Revendications

1. Procédé de préparation d'un article en feuille destiné à être fixé sur un support définitif, le procédé comprenant les étapes suivantes :
- appliquer au moins une couche de matière à peindre (201, 202, 203) sur un support temporaire (10), le support temporaire étant choisi pour qu'après séchage, une séparation entre le support temporaire (10) et la couche de matière à peindre, ou la première couche de matière à peindre, puisse être assurée par pelage, **caractérisé en ce qu'**il consiste :
- avant séchage complet de la couche de matière à peindre, ou de la dernière couche de matière à peindre, à appliquer directement sur la surface libre de celle-ci une couche de dossier (30) en matériau fibreux non adhésivé dans des conditions mécaniques propres à créer une interpénétration partielle des fibres du matériau de la couche de dossier (30) et de la matière à peindre (203) non séchée et, après séchage, un ancrage permanent de la ou des couches de matière à peindre sur ladite couche de dossier (30).

2. Procédé selon la revendication 1, **caractérisé en ce que** le support temporaire (10) est un support moulant, dont l'état de surface est transféré en négatif à la couche de matière à peindre ou à la première couche de matière à peindre (201).

3. Procédé selon l'une des revendications 1 et 2, **caractérisé en ce que** la couche de dossier (30) en matériau fibreux est une feuille d'un non-tissé.

4. Procédé selon la revendication 3, **caractérisé en ce que** le non-tissé comprend des fibres d'au moins un matériau choisi dans le groupe comprenant verre, polyesters, cellulose, polypropylène, et un liant.

5. Procédé selon la revendication 4, **caractérisé en ce que** le non-tissé comprend en outre un liant.

6. Procédé selon l'une des revendications 3 à 5, **caractérisé en ce que** l'épaisseur de la couche de dossier (30) est comprise entre environ 50 et 400 µm.

7. Procédé selon l'une des revendications 3 à 6, **caractérisé en ce que** le grammage de la couche de dossier (30) est compris entre environ 10 et 150 g/m².

8. Procédé selon l'une des revendications 1 à 7, **caractérisé en ce que** la couche de matière à peindre ou la dernière couche de matière à peindre présente une épaisseur comprise entre environ 15 et 150 µm après séchage.

9. Procédé selon l'une des revendications 1 à 8, **caractérisé en ce que** l'étape d'application de la couche de dossier (30) est mise en œuvre avec une pression d'application obtenue par réduction de l'épaisseur de l'ensemble comprenant le support temporaire, la ou les couches de matière à peindre et le dossier jusqu'à une valeur comprise entre environ 65 et 95% de la somme de leurs épaisseurs à l'état libre.

10. Procédé selon l'une des revendications 1 à 9, **caractérisé en ce qu'**il comprend l'application de plusieurs couches de matière à peindre dont une couche de finition (201) directement en contact avec le support temporaire (10) et une couche primaire (203) destinée à recevoir la feuille mince de dossier.

11. Procédé selon l'une des revendications 1 à 10, **caractérisé en ce qu'**il comprend une étape supplémentaire de séparation du support temporaire (10) d'avec la couche de matière peindre ou d'avec la première couche de matière à peindre, une fois séchée.

12. Procédé selon la revendication 11, **caractérisé en ce qu'**il comprend en outre une étape d'application d'un film de protection pelable (40) sur la surface libre de la ou des couches de matière à peindre dégagée(s) du support temporaire (10).

13. Procédé de fabrication de plusieurs articles en feuille successivement, **caractérisé en ce qu'**il comprend plusieurs mises en œuvre du procédé selon l'une des revendications 11 et 12 avec le même support temporaire (10).

14. Procédé selon l'une des revendications 1 à 11, **caractérisé en ce que** le support temporaire (10) est destiné à demeurer sur l'article en feuille (F) jusqu'à sa pose et tient lieu de couche de protection pelable.

## Patentansprüche

1. Verfahren zum Präparieren eines folienförmigen Artikels bzw. Gegenstands, der zum Befestigen an einem dauerhaften Träger bestimmt ist, wobei das Verfahren die folgenden Schritte umfasst:
- Aufbringen mindestens einer Schicht aus Lackier- bzw. Farbmaterial (201, 202, 203) auf einen vorläufigen Träger (10), wobei der vorläufige Träger so gewählt ist, dass nach dem Trocknen eine Trennung zwischen dem vorläufigen Träger (10) und der Schicht aus Lackiermaterial bzw. der ersten Schicht aus Lackiermaterial durch Abziehen gewährleistet werden kann, **dadurch gekennzeichnet, dass** das Verfahren folgendes umfasst:
- vor dem vollständigen Trocknen der Schicht des Lackiermaterials bzw. der letzten Schicht des Lackiermaterials wird direkt auf die freie Oberfläche davon eine Stützschicht (30) aus nicht haftendem Fasermaterial unter mechanischen Bedingungen aufgebracht, um eine teilweise Durchdringung der Fasern des Materials der Stützschicht (30) und des ungetrockneten Lackiermaterials (203) und, nach dem Trocknen, eine dauerhafte Verankerung der Schicht bzw. Schichten aus Lackiermaterial auf der Stützschicht (30) zu erzeugen.

2. Verfahren nach Anspruch 1, **dadurch gekennzeichnet, dass** der vorläufige Träger (10) ein geformter bzw. gegossener Träger ist, dessen Oberflächenzustand negativ auf die Schicht aus Lackiermaterial bzw. die erste Schicht aus Lackiermaterial (201) übertragen wird.

3. Verfahren nach einem der Ansprüche 1 und 2, **dadurch gekennzeichnet, dass** die Stützschicht (30) aus Fasermaterial eine Folie bzw. ein Bogen aus einem Vliesstoff ist.

4. Verfahren nach Anspruch 3, **dadurch gekennzeichnet, dass** der Vliesstoff Fasern aus mindestens einem Material, ausgewählt aus der Gruppe bestehend aus Glas, Polyester, Zellulose, Polypropylen und einem Bindemittel, umfasst.

5. Verfahren nach Anspruch 4, **dadurch gekennzeichnet, dass** der Vliesstoff zusätzlich ein Bindemittel umfasst.

6. Verfahren nach einem der Ansprüche 3 bis 5, **dadurch gekennzeichnet, dass** die Dicke der Stützschicht (30) zwischen etwa 50 und 400 µm liegt.

7. Verfahren nach einem der Ansprüche 3 bis 6, **dadurch gekennzeichnet, dass** das Flächengewicht der Stützschicht (30) zwischen etwa 10 und 150 g/m² liegt.

8. Verfahren nach einem der Ansprüche 1 bis 7, **dadurch gekennzeichnet, dass** die Schicht aus Lackiermaterial bzw. die letzte Schicht aus Lackiermaterial nach dem Trocknen eine Dicke zwischen etwa 15 und 150 µm aufweist.

9. Verfahren nach einem der Ansprüche 1 bis 8, **dadurch gekennzeichnet, dass** der Schritt des Aufbringens der Stützschicht (30) mit einem Anpressdruck durchgeführt wird, der durch Verringerung der Dicke der Anordnung aus dem vorläufigen Träger, der Schicht bzw. den Schichten aus Lackiermaterial und der Stütze auf einen Wert zwischen etwa 65 und 95 % der Summe ihrer Dicken im freien Zustand erhalten wird.

10. Verfahren nach einem der Ansprüche 1 bis 9, **dadurch gekennzeichnet, dass** es das Auftragen einer Mehrzahl von Schichten aus Lackiermaterial umfasst, darunter eine Deckschicht (201), die in direktem Kontakt mit dem vorläufigen Träger (10) steht, und eine Grundierungsschicht (203), die dazu bestimmt ist, die dünne Stützfolie aufzunehmen.

11. Verfahren nach einem der Ansprüche 1 bis 10, **dadurch gekennzeichnet, dass** es einen weiteren Schritt des Trennens des vorläufigen Trägers (10) von der Schicht aus Lackiermaterial bzw. von der ersten Schicht aus Lackiermaterial nach dem Trocknen umfasst.

12. Verfahren nach Anspruch 11, **dadurch gekennzeichnet, dass** es des weiteren einen Schritt des Aufbringens eines abziehbaren Schutzfilms (40) auf die freie Oberfläche der von dem vorläufigen Träger (10) abgelösten Schicht bzw. Schichten aus Lackiermaterial umfasst.

13. Verfahren zur aufeinanderfolgenden Herstellung einer Mehrzahl von folienförmigen Artikeln bzw. Gegenständen, **dadurch gekennzeichnet, dass** es eine Mehrzahl von Durchführungen des Verfahrens nach einem der Ansprüche 11 und 12 mit demselben vorläufigen Träger (10) umfasst.

14. Verfahren nach einem der Ansprüche 1 bis 11, **dadurch gekennzeichnet, dass** der vorläufige Träger (10) dazu bestimmt ist, bis zu seiner Verlegung auf dem folienförmigen Artikel (F) zu verbleiben und als abziehbare Schutzschicht dient.

## Claims

1. Method for preparing a sheet item designed to be fixed onto a final carrier, the method comprising the following steps:
- applying at least one layer, of paint material (201, 202, 203), onto a temporary carrier (10), the temporary carrier being selected so that, after drying, the temporary carrier (10) can be separated from the layer of paint material or from the first layer of paint material by peeling, **characterized in that** it consists:
- before the layer of paint material or the last layer of paint material has completely dried, applying directly onto the free surface thereof a non-adhesive fibrous material backing layer (30) under mechanical conditions suitable for creating partial interpenetration of the fibers of the material of the backing layer (30) and the undried paint material (203) and, after drying permanently anchoring the layer(s) of paint material, onto said backing layer (30).

2. Method according to claim 1, **characterized in that** the temporary carrier (10) is a molding carrier, the surface condition of which is transferred in negative to the layer of paint material or to the first layer of paint material (201).

3. Method according to one of claims 1 and 2, **characterized in that** the backing layer (30) made of fibrous material is a non-woven sheet.

4. Method according to claim 3, **characterized in that** the non-woven sheet comprises fibers of at least one material chosen from the group comprising glass, polyesters, cellulose, polypropylene, and a binder.

5. Method according to claim 4, **characterized in that** the non-woven material also comprises a binder.

6. Method according to one of claims 3 to 5, **characterized in that** the thickness of the backing layer (30) is between around 50 and 400 µm.

7. Method according to one of claims 3 to 6, **characterized in that** the grammage of the backing layer (30) is between around 10 and 150 g/m².

8. Method according to one of claims 1 to 7, **characterized in that** the layer of paint material or the last layer of paint material has a thickness of between around 15 and 150 µm after drying.

9. Method according to one of claims 1 to 8, **characterized in that** the step of applying the backing layer (30) is implemented with an application pressure obtained by reducing the thickness of the assembly comprising the temporary carrier, the layer(s) of paint material and the backing layer up to a value of between around 65 and 95% of the sum of their thicknesses in the free state.

10. Method according to one of claims 1 to 9, **characterized in that** it comprises the application of several layers of paint material, among which a finishing layer (201) directly in contact with the temporary carrier (10) and a primer layer (203) intended to receive the thin backing layer.

11. Method according to one of claims 1 to 10, **characterized in that** it comprises an additional step of separating the temporary carrier (10) from the layer of paint material or from the first layer of paint material, once dried.

12. Method according to claim 11, **characterized in that** it also comprises a step of applying a peelable protective film (40) onto the free surface of the layer(s) of paint material released from the temporary carrier (10).

13. Method for manufacturing several sheet items successively, **characterised in that** it comprises several implementations of the method according to one of claims 11 and 12 with the same temporary carrier (10).

14. Method according to one of claims 1 to 11, **characterized in that** the temporary carrier (10) is intended to remain on the sheet item (F) until installation thereof and plays the role of a peelable protective layer.
